Europäisches Patentamt

European Patent Office

Office européen des brevets

(19)

(11) Veröffentlichungsnummer: **0 275 057 B1**

(12) **EUROPÄISCHE PATENTSCHRIFT**

(45) Veröffentlichungstag der Patentschrift: **11.03.92**

(51) Int. Cl.5: **B29C 47/04**, B29C 47/12

(21) Anmeldenummer: **88100216.6**

(22) Anmeldetag: **09.01.88**

(54) **Strangpresswerkzeug zum Herstellen von marmorierten Profilen.**

(30) Priorität: **13.01.87 DE 3700724**

(43) Veröffentlichungstag der Anmeldung:
**20.07.88 Patentblatt 88/29**

(45) Bekanntmachung des Hinweises auf die
Patenterteilung:
**11.03.92 Patentblatt 92/11**

(84) Benannte Vertragsstaaten:
**AT ES FR GB IT**

(56) Entgegenhaltungen:
EP-A- 0 059 408          EP-A- 0 070 567
DE-A- 2 054 865          DE-A- 2 420 223
DE-A- 2 654 774          DE-U- 8 530 358
GB-A- 742 760            US-A- 2 174 779
US-A- 3 942 773          US-A- 4 447 156

PATENT ABSTRACTS OF JAPAN, Band 7, Nr.
5 (M-184)[1150], 11. Januar 1983; & JP-A-57
163 547 (KAZUHIKO OKADA) 07-10-1982

IDEM

PATENT ABSTRACTS OF JAPAN, Band 6, Nr.
228 (M-171)[1106], 13. November 1982; & JP-
A-57 129 733 (KAZUHIKO OKADA) 11-08-1982

IDEM

PATENT ABSTRACTS OF JAPAN, Band 5, Nr.
131 (M-84)[803], 21. August 1981; & JP-A-56
67 237 (HITACHI KASEI KOGYO K.K.)
06-06-1981

(73) Patentinhaber: **W. Döllken & Co GmbH**
**Ruhrtalstrasse 71**
**W-4300 Essen 16(DE)**

(72) Erfinder: **Eschbach, Mathias**
**Varusstrasse 46**
**W-4358 Haltern(DE)**
Erfinder: **Schliehe, Wolf-Dieter**
**Im Werth 43**
**W-4270 Dorsten(DE)**

(74) Vertreter: **Andrejewski, Walter et al**
**Patentanwälte Dipl.-Phys. Dr. Walter Andre-**
**jewski Dipl.-Ing. Dr.-Ing. Manfred Honke**
**Dipl.-Phys. Dr. Karl Gerhard Masch Theater-**
**platz 3, Postfach 10 02 54**
**W-4300 Essen 1(DE)**

EP 0 275 057 B1

## Beschreibung

Die Erfindung betrifft ein Strangpreßwerkzeug zum Herstellen von marmorierten Profilen mit einem an die Schneckenwelle angeschlossenen Mischer und an den Zylinder angeschlossenen Mischergehäuse, wobei das Mischergehäuse eine Einrichtung zum Einspeisen des Zusatzkunststoffes und der Mischer ein Anschlußstück aufweist, dessen Durchmesser den Kern der zugeordneten Schneckenwelle entspricht. - Marmorierung bezeichnet eine Durchmischung von zwei oder mehr als zwei thermoplastischen Kunststoffen, die eine marmorartige Struktur bewirkt. Man benutzt solche Kunststoffstränge für die verschiedensten Zwecke, insbesondere als Profile oder Leisten in der Möbelindustrie, wenn die Profile oder Leisten im Anschnitt oder nach dem Beihobeln bei der Verbindung mit einem Möbelstück eine holzartige Maserung aufweisen sollen.

Maßnahmen zum Strangpressen eines thermoplastischen Kunststoffstranges aus einem Grundkunststoff und zumindest einem eingemischten marmorierungsbildenden Zusatzkunststoff sind bekannt (DE-GM 85 30 358). Bei dem bekannten Verfahren wird der Zusatzkunststoff im Strangpreßwerkzeug gleichsam von außen auf den Strang des Grundkunststoffes aufgebracht. Das führt zunächst zu Strähnen, die von einer Marmorierung weit entfernt sind. Um die Marmorierung herbeizuführen, muß eine zusätzliche Verwirbelung erfolgen, was häufig zu wenig befriedigenden Ergebnissen führt. Bei dem insoweit bekannten Strangpreßwerkzeug besteht der Mischer aus einer Platte, die diametral und achsparallel in das Anschlußstück eingesetzt ist.

Ferner ist ein gattungsgemäßes Strangpreßwerkzeug bekannt (EP-A 00 59 408), bei dem der Zusatzkunststoff im Strangpreßwerkzeug von innen in den Strang aus dem Grundkunststoff eingeführt bzw. eingemischt wird. Dabei werden Kunststoffschneckenpresse und Mischer axial hintereinander angeordnet.

Der Erfindung liegt die Aufgabe zugrunde, ein Strangpreßwerkzeug anzugeben, mit dem eine eindrucksvolle Marmorierung erreichbar ist, die im Bedarfsfall eine äußere, gleichsam umhüllende Abdeckung aus dem Grundkunststoff aufweist. Die Marmorierung kann dann durch spanabhebende Bearbeitung, die die Umhüllung entfernt, als Holzmaserung freigelegt werden. Andererseits kann die Umhüllung auch mit einer Holzmaserung bedruckt werden oder mit einer entsprechenden Folie adhäsiv verbunden werden.

Zur Lösung dieser Aufgabe lehrt die Erfindung, daß an das Anschlußstück des Mischers ein Halsstück angeschlossen ist, dessen Durchmesser mit einem Reduzierteil gegenüber dem Anschlußstück vermindert ist, das das Halsstück einen Mischkopf mit Halsanschlußkonus und Kegelspitze trägt, dessen Durchmesser, bis auf die Kegelspitze, dem Durchmesser des Anschlußstückes entspricht und der zur Mischerachse parallele, vom dem Halsanschlußkonus ausgehende, in der Kegelspitze mündende Schmelzekanäle aufweist, daß das Mischergehäuse mit einem Ringteil bis auf einen Durchtrittsspalt für die Schmelze an das Halsstück mit Reduzierteil und Halsanschlußkonus herangeführt ist, welches Ringteil über Durchtrittskanäle für die Schmelze bildende Stege mit dem umgebenden Mischergehäuse verbunden ist und daß das umgebende Mischergehäuse einen umlaufenden Einspeiseringraum für den Zusatzkunststoff aufweist, der mit radialen, durch die Stege geführten Einspeisekanälen versehen ist, die im Bereich des Halsstückes des Mischers enden.

Nach bevorzugter Ausführungsform der Erfindung besitzt das Halsstück einen Durchmesser, der gleich dem halben Durchmesser des Anschlußstückes oder kleiner ist. Die Schmelzekanäle sind zweckmäßigerweise als Schlitzkanäle ausgeführt, und zwar mit einem bogenförmigen Querschnitt bei einem Schnitt orthogonal zur Achse der Schneckenwelle bzw. des Strangpreßwerkzeuges. Auch die Durchtrittskanäle besitzen zweckmäßigerweise einen solchen bogenförmigen Querschnitt. Im Rahmen der Erfindung liegt es, den Mischkopf bereichsweise mit zusätzlichen Mischstiften zu besetzen, die in die umgebende Schmelze hineinragen.

Die erreichten Vorteile sind darin zu sehen, daß erfindungsgemäß eine sehr eindrucksvolle Marmorierung erreicht werden kann, und zwar im Bedarfsfall auch mit einer äußeren Umhüllung der Marmorierung durch den Grundkunststoff. Um dieses zu erreichen, muß lediglich die Spaltweite zwischen Mischkopf und Mischergehäuse im Bereich der Kegelspitze entsprechend eingerichtet oder eingestellt werden.

Im folgenden wird die Erfindung anhand einer lediglich ein Ausführungsbeispiel darstellenden Zeichnung ausführlicher erläutert. Es zeigen in schematischer Darstellung

Fig. 1      einen Längsschnitt durch ein erfindungsgemäßes Strangpreßwerkzeug,

Fig. 2      einen Schnitt in Richtung AA durch den Gegenstand nach Fig. 1.

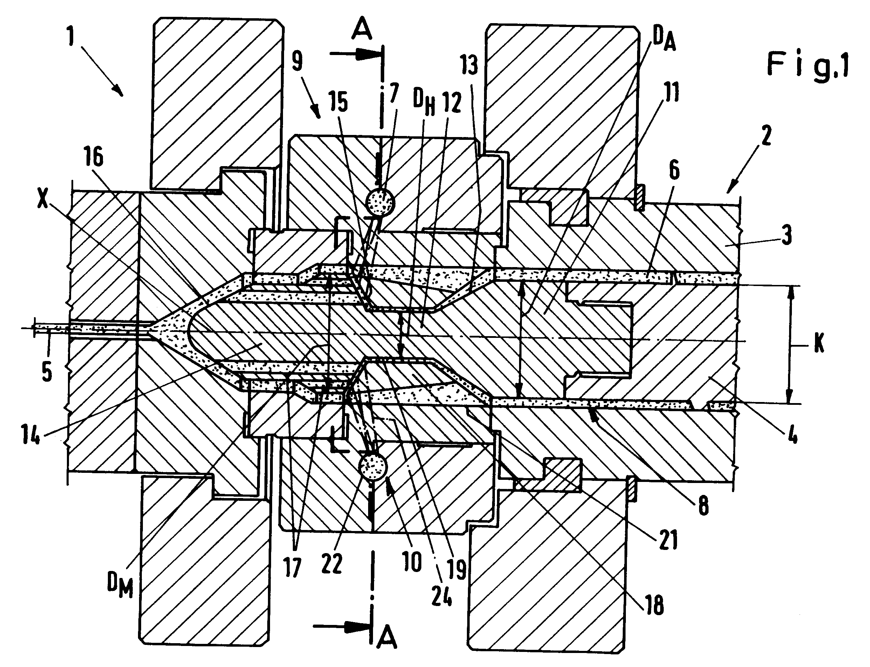

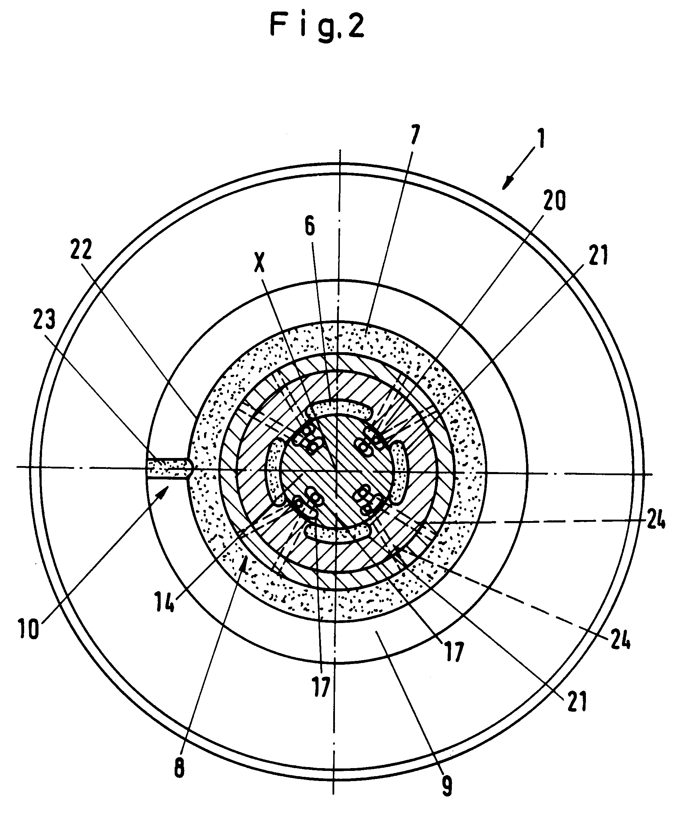

Das in den Figuren dargestellte Strangpreßwerkzeug 1 ist an eine Kunststoffschneckenpresse 2 anschließbar, von der man rechts in der Fig. 1 den Zylinder 3 und die Schneckenwelle 4 erkennt. Das Strangpreßwerkzeug 1 dient zum Strangpressen eines thermoplastischen Kunststoffstranges 5 aus einem Grundkunststoff 6 und zumindest einem eingemischten marmorierungsbildenden Zusatzkunststoff 7. An die Schneckenwelle 4 ist ein Mischer 8 angeschlossen und an den Zylinder 3 das umgebende Mischergehäuse 9. Das Mischergehäuse besitzt eine Einrichtung 10 zum Einspeisen des Zusatzkunststoffes 7. Es versteht sich, daß diese Einrichtung 10 an eine weitere Schneckenstrangpresse zur Aufbereitung des Zusatzkunststoffes 7 angeschlossen ist. Der Mischer 8 weist ein Anschlußstück 11 auf, dessen Durchmesser DA dem Kern K der zugeordneten Schneckenwelle 4 entspricht. Aus einer vergleichenden Betrachtung der Figuren 1 und 2 entnimmt man, daß an das Anschlußstück 11 des Mischers 8 ein Halsstück 12 angeschlossen ist, dessen Durchmesser DH mit einem Reduzierteil 13 gegenüber dem Anschlußstück 11 vermindert ist. Das Halsstück 12 trägt einen Mischkopf 14 mit Halsanschlußkonus 15 und Kegelspitze 16. Der Durchmesser DM des Mischkopfes 14 entspricht, bis auf die Kegelspitze 16, dem Durchmesser DA des Anschlußstückes 11 und damit des Kerns K der Schneckenwelle 4. Der Mischkopf 14 besitzt zur Mischerachse X parallele, von dem Halsanschlußkonus 15 ausgehende, in der Kegelspitze 16 mündende Schmelzekanäle 17. Das Mischergehäuse 9 ist mit einem Ringteil 18 versehen, das bis auf einen Durchtrittsspalt 19 für die Schmelze an das Halsstück 12 mit Reduzierteil 13 und Halsanschlußkonus 15 herangeführt ist. Das Ringteil 18 ist über Stege 20, die Durchtrittskanäle 21 für die Schmelze bilden, mit dem umgebenden Mischergehäuse 9 verbunden. Das umgebende Mischergehäuse 9 besitzt einen umlaufenden Einspeiseringraum 22 für den Zusatzkunststoff.

Die Zuführung des Zusatzkunststoffes 7 in den Einspeiseringraum 22 hinein erfolgt über einen Kanal 23. Von dem Einspeiseringraum 22 gehen radiale, durch die Stege 20 geführte Einspeisekanäle 24 ab, die im Bereich des Halsstückes 12 des Mischers 8 enden. Im Ausführungsbeispiel besitzt das Halsstück 12 einen Durchmesser DH, der gleich dem halben Durchmesser DA des Anschlußstückes 11 und sogar etwas kleiner ist. Die Schmelzekanäle 17 sind, wie man insbesondere aus der Fig. 2 entnimmt, Schlitzkanäle, die bogenformig geführt sind. Das gilt auch für die Durchtrittskanäle 21.

## Patentansprüche

1. Strangpreßwerkzeug zum Herstellen von marmorierten Profilen mit einem an die Schnekkenwelle (4) angeschlossenen Mischer (8) und an den Zylinder (3) angeschlossenen Mischergehäuse (9), wobei das Mischergehäuse (9) eine Einrichtung (10) zum Einspeisen des Zusatzkunststoffes und der Mischer (8) ein Anschlußstück (11) aufweist, dessen Durchmesser dem Kern der zugeordneten Schneckenwelle (4) entpricht, **dadurch gekennzeichnet,** daß an das Anschlußstück (11) des Mischers

(8) ein Halsstück (12) angeschlossen ist, dessen Durchmesser (DH) mit einem Reduzierteil (13) gegenüber dem Anschlußstück (11) vermindert ist, das das Halsstück (12) einen Mischkopf (14) mit Halsanschlußkonus (15) und Kegelspitze (16) trägt, dessen Durchmesser (DM), bis auf die Kegelspitze (16), dem Durchmesser (DA) des Anschlußstückes (11) entspricht und der zur Mischerachse (X) parallele, von dem Halsanschlußkonus (15) ausgehende, in der Kegelspitze (16) mündende Schmelzekanäle (17) aufweist, daß das Mischergehäuse (9) mit einem Ringteil (18) bis auf den Durchtrittsspalt (19) für die Schmelze an das Halsstück (12) mit Reduzierteil (13) und Halsanschlußkonus (15) herangeführt ist, welches Ringteil (18) über Durchtrittskanäle (21) für die Schmelze bildende Stege (20) mit dem umgebenden Mischergehäuse (9) verbunden ist und daß das umgebende Mischergehäuse (9) einen umlaufenden Einspeiseringraum (22) für den Zusatzkunststoff (7) aufweist, der mit radialen, durch die Stege (20) geführten Einspeisekanälen (22) versehen ist, die im Bereich des Halsstückes (12) des Mischers enden.

2. Strangpreßwerkzeug nach Anspruch 1, dadurch gekennzeichnet, daß das Halsstück (12) einen Durchmesser (DH) aufweist, der gleich dem halben Durchmesser (DA) des Anschlußstückes (11) oder kleiner ist.

3. Strangpreßwerkzeug nach einem der Ansprüche 1 oder 2, dadurch gekennzeichnet, daß die Schmelzekanäle (17) als Schlitzkanäle ausgeführt sind, die einen bogenförmigen Querschnitt aufweisen.

4. Strangpreßwerkzeug nach einem der Ansprüche 1 bis 3, dadurch gekennzeichnet, daß die Durchtrittskanäle (21) einen bogenförmigen Querschnitt aufweisen.

## Claims

1. An extrusion press tool for the production of sections with a marbled finish, with a mixer (8) attached to the helical screw shaft (4) and a mixer housing (9) attached to the cylinder (3), in which the mixer housing (9) possesses an appliance (10) to feed in the additional plastics material and the mixer (8) possesses a connecting piece (11) the diameter of which corresponds to that of the core of the associated helical screw shaft (4) *characterized in that* a neck piece (12) is attached to the connection piece (11) of the mixer (8), the diameter (DH) of which is reduced relatively to the connecting piece (11) by a reducing portion (13), that the neck piece (12) carries a mixing head (14) with a neck connection cone (15) and a conical tip (16), the diameter (DM) of the mixing head, apart from the conical tip (16), corresponds to the diameter (DA) of the connecting piece (11) and it possesses fused mass channels (17) parallel to the mixer axis (X), commencing from the neck connection cone (15) and opening out in the conical tip (16), that apart from a gap (19) for the passage of the fused mass the mixer housing (9) is brought up against the neck piece (12) with a reducing portion (13) and a neck connection cone (15) by an annular portion (18), which annular portion (18) is connected to the surrounding mixer housing (9) by fillets (20) that form passage channels (21) for the fused mass, and that the surrounding mixer housing (9) possesses a circular feed annulus (22) for the additional plastics material (7) that is provided with radial feed channels (22) that pass through the fillets (20) and end in the vicinity of the neck piece (12) of the mixer.

2. An extrusion press tool according to Claim 1, *characterized in that* the neck piece (12) has a diameter (DH) that is equal to or less than half the diameter (DA) of the connecting piece (11).

3. An extrusion press tool according to one of Claims 1 or 2, *characterized in that* the fused mass channels (17) are constructed as slot channels that have an arched shape cross section.

4. An extrusion press tool according to one of Claims 1 to 3, *characterized in that* the passage channels (21) possess an arched-shape cross section.

## Revendications

1. Filière d'extrusion pour la fabrication de profilés marbrés, comprenant un mélangeur (8) raccordé à un arbre de vis sans fin (4) et un carter de mélangeur (9) raccordé au cylindre (3), le carter de mélangeur (9) comportant un dispositif (10) pour l'amenée de la matière plastique additive et le mélangeur (8) étant muni d'un raccord (11) dont le diamètre correspond au noyau de l'arbre de vis sans fin (4) associé, **caractérisée par le fait** qu'au raccord (11) du mélangeur (8) fait suite un élément de col (12) dont le diamètre (DH) est diminué au moyen d'un réducteur (13) par rapport audit raccord (11); que l'élément de col (12) porte une tête mélangeuse (14) avec cône de raccordement de col (15) et pointe (16), dont le diamètre (DM) correspond, à l'exception de la pointe (16), au diamètre (DA) du raccord (11) et qui présente des canaux de matière en fusion (17) orientés parallèlement à l'axe (X) du mélangeur, partant du cône de raccordement du col (15) et débouchant dans la pointe (16); que le carter de mélangeur (9) est rapproché avec un élément annulaire (18), de l'élément de col (12) avec réducteur (13) et cône de raccordement de col (15) de manière à laisser subsister une fente (19) pour le passage de la matière en fusion, l'élément annulaire (18) étant rattaché au carter de mélangeur (9) environnant par l'intermédiaire de barrettes (20) formant des canaux de passage (21) pour la matière en fusion; et que le carter de mélangeur (9) environnant comporte un espace annulaire continu (22) pour l'amenée de la matière plastique additive (7) lequel est muni de canaux d'alimentation radiaux (22) passant par les barrettes (20) et se terminant dans la région de l'élément de col (12) du mélangeur.

2. Filière d'extrusion selon la revendication 1, caractérisée par le fait que l'élément de col (12) présente un diamètre (DH) qui est égal ou inférieur à la moitié du diamètre (DA) du raccord (11).

3. Filière d'extrusion selon l'une des revendications 1 ou 2, caractérisée par le fait que les canaux (17) pour la matière en fusion sont réalisés sous la forme de canaux à fente avec une section transversale en arc.

4. Filière d'extrusion selon l'une des revendications 1 à 3, caractérisée par le fait que les canaux de passage (21) présentent une section transversale en forme d'arc.

Fig.1

EP 0 275 057 B1

# F i g. 2